# EUROPEAN PATENT SPECIFICATION

(11) **EP 1 721 826 B1**
(45) Date of publication and mention of the grant of the patent: **24.09.2008**
(21) Application number: 06113746.9
(22) Date of filing: 10.05.2006
(51) Int. Cl.: B64C 13/00, B64C 13/42

(54) **Flight control surface actuation system with redundantly configured actuator assemblies**
Betätigungssystem für Flugzeugsteuerflächen mit redundantkonfigurierten Betätigunsvorrichtungen
Système d'actionnement d'une surface de commande de vol avec commandes configurées avec redondance

(30) Priority: 28.07.2005 US 193059; 11.05.2005 US 680073 P
(43) Date of publication of application: 15.11.2006
(73) Proprietor: Honeywell International Inc., Morristown NJ 07960 (US)
(72) Inventor: Benson, Dwayne M., Chandler, AZ 85225 (US); Hanlon, Casey, Queen Creek, AZ 85242 (US); Potter, Calvin C., Mesa, AZ 85206 (US); Wingett, Paul T., Mesa, AZ 85202-7471 (US)
(74) Representative: Haley, Stephen

(56) References cited:
- EP-A- 0 237 650
- US-A- 4 470 569
- US-A1- 2004 075 019

## Description

The present invention relates to flight control surface actuation and, more particularly, to a flight control surface actuation system that includes redundantly configured actuator assemblies.

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft. Although some aircraft may include additional control surfaces, the primary flight control surfaces typically include a pair of elevators, a rudder, and a pair of ailerons, and the secondary flight control surfaces typically include a plurality of flaps, slats, and spoilers.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. In most instances, this movement is effected via actuators that are coupled to the flight control surfaces. Though unlikely, it is postulated that a flight control surface actuator could become inoperable. Thus, some flight control surface actuation systems are implemented with a plurality of actuators coupled to a single flight control surface.

Although flight control surface actuation systems, such as the one generally described above, operate safely, reliably, and robustly, these systems can suffer certain drawbacks. For example, for some types of actuators, if the actuator is rendered inoperable, the remaining actuators that are coupled to the same flight control surface may not be able to move the flight control surface sufficiently to compensate for the inoperability. The inoperable actuator may therefore prevent, or at least inhibit, movement of the flight control surface. If the flight control surface is in a position other than in a neutral position during such an event, the aircraft may be difficult to handle.

Hence, there is a need for a system and method that will not prevent or inhibit an actuator from moving a flight control surface in the unlikely event that another actuator that is coupled to the same flight control surface becomes inoperable. The present invention addresses at least his need.

The present invention provides a flight control surface actuation system redundancy mechanism that allows one or more actuators to effect full and continued flight control surface movement in the unlikely event that one or more additional actuators that are coupled to the same flight control surface become inoperable.

US-A-2004/075019 discloses a flight control surface actuator assembly.

According to the present invention there is provided a flight control surface actuator assembly, comprising:
first and second flight control surface actuators, each flight control surface actuator adapted to couple to a flight control surface, each flight control surface actuator further adapted to receive a drive force and operable, upon receipt thereof, to move between at least an extended position and a retracted position; and
a pivot arm rotationally coupled to, and configured to pivot relative to, the first and second flight control surface actuators, the pivot arm adapted to be rotationally coupled to, and configured to pivot relative to, a static airframe structure.

In yet another exemplary embodiment, a flight control surface actuation system includes an actuator controller, first and second drive force controllers, first and second actuators, and a pivot arm. The actuator controller is adapted to receive flight control surface position commands and is operable, in response thereto, to supply actuator position commands. The first and second drive force control units are coupled to receive the actuator position commands and are operable, upon receipt thereof, to supply a drive force to the above actuator assembly.

Other independent features and advantages of the preferred flight control surface actuator assembly and system will become apparent from the following detailed description, taken in conjunction with the accompanying drawings which illustrate, by way of example, the principles of the invention.

In the Drawings;
FIG. 1 is a schematic diagram of a portion of an exemplary embodiment of an aircraft depicting an embodiment of an exemplary flight control surface actuation system;
FIGS. 2 and 3 are schematic representations of an exemplary embodiment of a redundant flight control surface actuator assembly coupled to a flight control surface, and that may be used in the flight control surface actuation system of the aircraft of FIG. 1; and
FIG. 4 is a perspective view of an exemplary physical implementation of the exemplary redundant flight control surface actuator assembly shown in FIGS.2 and 3.

The following detailed description is merely exemplary in nature and is not intended to limit the invention or the application and uses of the invention. Furthermore, there is no intention to be bound by any theory presented in the preceding background or the following detailed description.

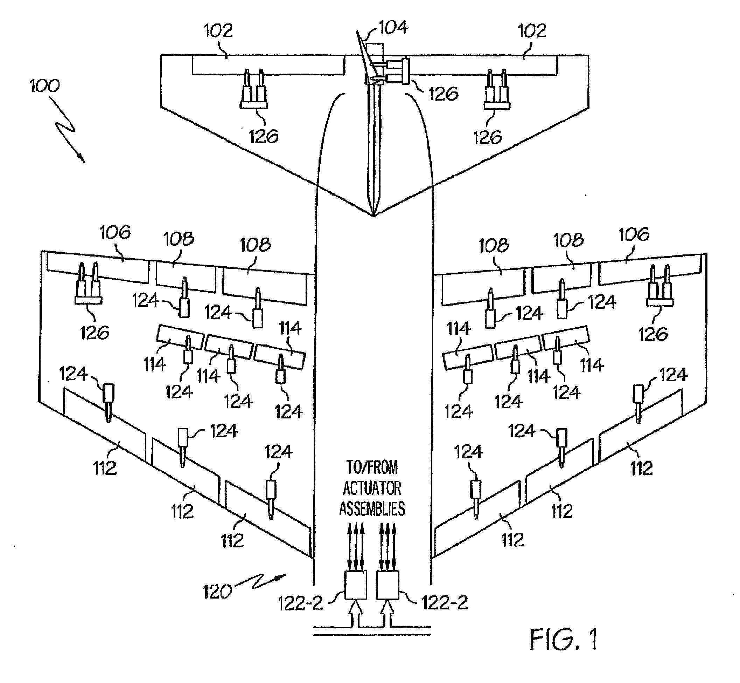

Turning first to FIG. 1, a schematic diagram of a portion of an exemplary aircraft and an exemplary flight control surface actuation system is shown. In the illustrated embodiment, the aircraft 100 includes a pair of elevators 102, a rudder 104, and a pair of ailerons 106, which are the primary flight control surfaces, and a plurality of flaps 108, slats 112, and spoilers 114, which are the secondary flight control surfaces. The primary flight control surfaces 102-106 control aircraft movement about the aircraft pitch, yaw, and roll axes. Specifically, elevators 102 are used to control aircraft movement about the pitch axis, the rudder 104 is used to control aircraft movement about the yaw axis, and the ailerons 106 control aircraft movement about the roll axis. It is noted, however, that aircraft movement about the yaw axis can also be achieved either by banking the aircraft or by varying the thrust levels from the engines on opposing sides of the aircraft 100.

The secondary control surfaces 108-114 influence the lift and drag of the aircraft 100. For example, during aircraft take-off and landing operations, when increased lift is desirable, the flaps 108 and slats 112 may be moved from retracted positions to extended positions. In the extended position, the flaps 108 increase both lift and drag, and enable the aircraft 100 to descend more steeply for a given airspeed, and also enable the aircraft 100 get airborne over a shorter distance. The slats 112, in the extended position, increase lift, and are typically used in conjunction with the flaps 108. The spoilers 114, on the other hand, reduce lift and when moved from retracted positions to extended positions, which is typically done during aircraft landing operations, may be used as air brakes to assist in slowing the aircraft 100.

The flight control surfaces 102-114 are moved between retracted and extended positions via a flight control surface actuation system 120. The flight control surface actuation system 120 includes one or more actuator controllers 122 and a plurality of primary and secondary flight control surface actuator assemblies 124 and 126. It will be appreciated that the number of actuator controllers 122 may vary. However, in the depicted embodiment, the flight control surface actuation system 120 includes two multi-channel actuator controllers 122 (122-1, 122-2).

The system 120 and actuator controllers 122-1, 122-2 may be implemented according to any one of numerous operational configurations. For example, the system 120 could be configured such that one of the controllers 122-1 (122-2) is an active controller, while the other controller 122-2 (122-1) is in an inactive (or standby) mode. Alternatively, the system 120 could be configured such that both controllers 122-1, 122-2 are active and controlling all, or selected ones, of the flight control surface actuator assemblies 124, 126. No matter the specific configuration, each controller 122-1, 122-2, when active, receives flight control surface position commands from one or more non-illustrated external systems, such as a flight control computer or pilot controls. In response to the flight control surface position commands, the active controllers 122-1, 122-2 supply actuator position command signals to the appropriate flight control surface actuator assemblies 124, 126. The flight control surface actuator assemblies 124, 126, in response to the position command signals, move the appropriate flight control surfaces 102-114 to the commanded flight control surface position.

The controllers 122-1, 122-2 also receive monitor signals that are representative of flight control surface actuator assembly 124, 126 operability. The controllers 122-1, 122-2, based on these monitor signals, determine the operability of the flight control surface actuator assemblies 124, 126. If one or both controllers 122-1, 122-2 determines that a primary flight control surface actuator assembly 126 is partially inoperable, it automatically compensates, if necessary, the actuator position commands supplied to that actuator assembly 126 for the partial inoperability. It will be appreciated that the monitor signals that the controllers 122-1, 122-2 receive may be supplied directly from the flight control surface actuator assemblies 124, 126, or from other systems and components such as, for example, non-illustrated flight surface position sensors.

The flight control surface actuation system 120 may also be implemented using various numbers and types of flight control surface actuator assemblies 124, 126. In addition, the number and type of flight control surface actuator assemblies 124, 126 per control surface 102-114 may be varied. In the depicted embodiment, the system 120 is configured such that a single, non-redundant actuator assembly 124 is coupled to each of the secondary flight control surfaces 108-114, and a single, redundant actuator assembly 126, embodiments of which are described in more detail further below, is coupled to each of the primary flight control surfaces 102-106.

Before proceeding further, it is noted that the embodiment depicted in FIG. 1 and described above is merely exemplary, and that the flight control surface actuation system 120 could be implemented in any one of numerous alternative configurations. For example, the system 120 could be configured such that two or more non-redundant actuator assemblies 124 are coupled to each, or selected ones, of the secondary flight control surfaces 108-114. The system 120 could also be configured such that one or more redundant actuator assemblies 126 are coupled to one or more of the secondary flight control surfaces 108-114, in addition to, or instead of, the single non-redundant actuator assemblies 124. Moreover, the system 120 could be configured such that two or more redundant actuator assemblies 126 are coupled to each, or selected ones, of the primary flight control surfaces 102-106.

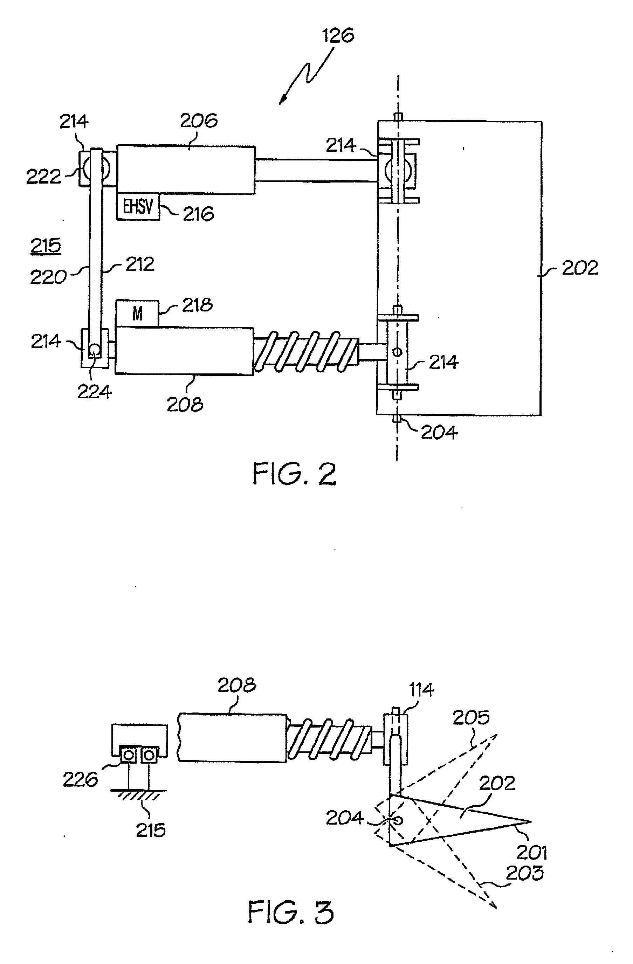

No matter the specific number and type of non-redundant actuator assemblies 124 that are used, a more detailed description of the structure and function of the non-redundant actuator assembly 124 is not needed to fully enable or describe the claimed invention. As such, no further description thereof is included herein. However, as was noted above, descriptions of various embodiments of the redundant flight control surface actuator assembly 126 are included, and with reference to FIGS. 2-4, will now be provided.

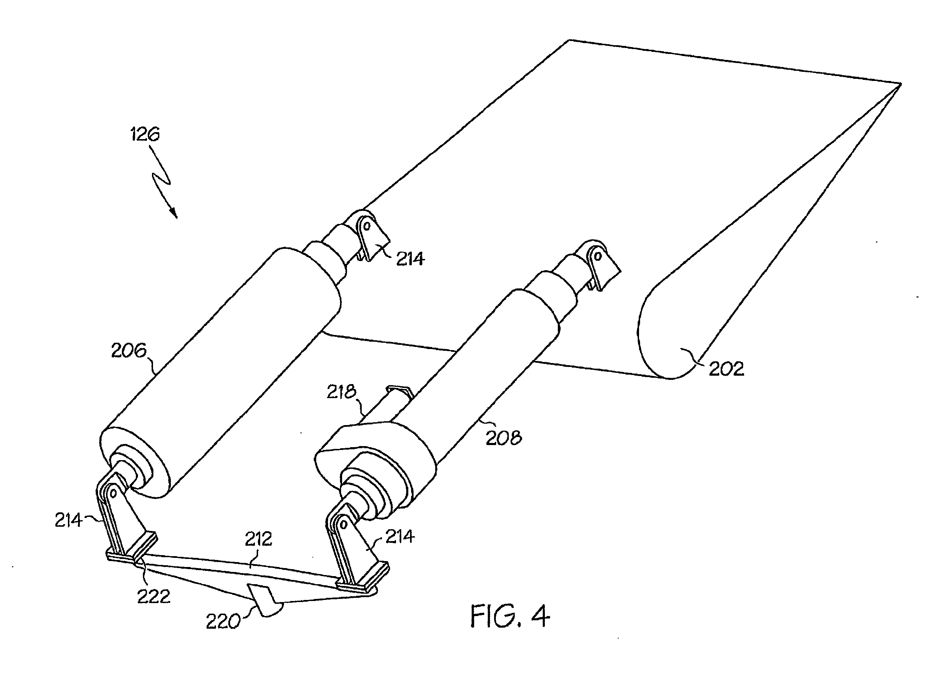

A schematic representation of an embodiment one of the redundant flight control surface actuator assemblies 126 coupled to a flight control surface 202 is shown in FIGS. 2 and 3, and a representative physical embodiment thereof is shown in FIG. 4. For the aircraft 100 depicted in FIG. 1, the flight control surface 202 shown in FIGS. 2-4 represents one of the primary flight control surfaces 102-106. However, as was mentioned above, the flight control surface 202 could, for other flight control surface actuation system 120 embodiments, also represent any one of the secondary flight control surfaces 108-114. No matter the specific flight control surface 202 that FIGS. 2-4 represent, it is seen that, at least in the depicted embodiment, the flight control surface 202 is configured to rotate about a pivot axis 204. In this regard, it is noted that the flight control surface 202 can be rotated, via the redundant flight control surface actuator assembly 126, from a neutral position 201 to various pivot positions between an extended position 203 and a retracted position 205. It will be appreciated that the flight control surface 202 could be configured to translate, rather than rotate, between extended and retracted positions.

The redundant flight control surface actuator assembly 126 includes two actuators - a first actuator 206 and a second actuator 208 - and a pivot arm 212. The two actuators 206, 208 are each coupled, via suitable coupling devices 214, to both the pivot arm 212 and the flight control surface 202. The coupling devices 214, which may be implemented using any one of numerous types of mounts and/or bearing assemblies, are preferably configured to provide each actuator 206, 208 at least two rotational degrees-of-freedom. Some non-limiting examples of suitable bearing assemblies include any one of numerous types of gimbal bearing assemblies or any one of numerous types of spherical bearing assemblies.

Before proceeding further, it will be appreciated that a non-illustrated position sensor, such as a rotary variable differential transformer (RVDT), is coupled to the pivot axis 204 and is configured to supply position signals representative of the position of the flight control surface 202. Moreover, although not depicted, the pivot axis 204 is may additionally be configured to include a plurality of pivot stops to limit the rotation of the flight control surface 202.

The actuators 206, 208 may be each implemented using any one of numerous types of actuators including, for example, electromechanical actuators, hydraulic actuators, electro-hydraulic actuators, pneumatic actuators, electropneumatic actuators, or various combinations thereof. It will additionally be appreciated that the actuators 206, 208 may be implemented as the same or different types of actuators. In the depicted embodiment, however, the actuators 206, 208 are implemented as different types of actuators, with the first actuator 206 being a hydraulic actuator, and the second actuator 208 being an electromechanical actuator. In addition, each actuator 206, 208 is preferably configured for double-stroke and full-load capability. Thus, in the unlikely event one of the actuators 206 or 208 becomes inoperable, the remaining actuator 208 or 206 can be used to provide full functionality.

No matter the specific types (or type) of actuators that are used, each actuator 206, 208, upon receipt of a drive force, is moveable between an extended position and a retracted position, and may be positioned to any one of numerous positions between the extended and retracted positions. In the depicted embodiment, the positions to which the actuators 206, 208 are moveable correspond to the neutral 201, extended 203, and retracted 205 positions of the flight control surface 202. It will be appreciated that the flight control surface extended 203 and retracted 205 positions correlate to actuator positions in which the actuators 206, 208 extend and retract, respectively, past neutral actuator positions. It will additionally be appreciated that the neutral actuator position can be any position between a fully extended actuator position and a fully retracted actuator position, and does not necessarily correspond to an actuator position that is at the midpoint of the actuator 206, 208 operational range. Preferably, the actuators 206, 208 are infinitely adjustable between the extended, neutral, and retracted actuator positions and can be continuously modulated during flight to optimize the position of the flight control surface 202 during flight.

The actuators 206, 208, as was previously noted, move between the extended and retracted actuator positions upon receipt of a drive force. In the depicted embodiment, the drive force is controllably supplied to each of the actuators 206, 208 via first and second drive force control units 216 and 218. As with the actuators 206, 208, the drive force control units 216, 218 may be implemented using any one of numerous types of devices and in any one of numerous configurations, which will typically depend on the type of actuator 206, 208 with which each unit 216, 218 is associated. In the depicted embodiment, in which the first actuator 206 is a hydraulic actuator and the second actuator 208 is an electromechanical actuator, the first drive force control unit 216 (not shown in FIG. 4) is a hydraulic fluid control valve and the second drive force control unit 218 is a motor.

The drive force control units 216, 218 are each coupled to receive the actuator position commands supplied from one or more of the controllers 122 and, upon receipt of the commands, controls the drive force that is supplied to the actuators 206, 208. More specifically, the first drive force control unit 216, in response to actuator position commands, controls the drive force supplied to the first actuator 206 by controlling hydraulic fluid through the first actuator. The second drive force unit 218, in response to actuator position commands, controls drive force supplied to the second actuator 208 by rotating in a commanded direction and at a commanded rotational speed. It will be appreciated that the first drive force control unit 216 may be implemented as any one of numerous types of control valves, and that the second drive force control unit 218 may be implemented as any one of numerous types of motors. A non-limiting example of an embodiment of the first drive force control unit 216 is an electro-hydraulic servo valve (EHSV), and a non-limiting example of the second drive force control unit 218 is a DC motor.

As noted above, the actuators 206, 208 are each coupled at one end to the pivot arm 212. The pivot arm 212 is in turn rotationally coupled to a static airframe structure 215. In the depicted embodiment, the pivot arm 212 has three pivot points - a center pivot point 220 and two end pivot points 222, 224. The center pivot point 220 is rotationally coupled to the airframe structure 215 via, for example, a suitable bearing assembly 226 (see FIG. 3), and is thus configured to pivot relative to the airframe structure 215. The two end pivot points 222 and 224 are rotationally coupled to, and are configured to pivot relative to, the first and second actuators 206 and 208, respectively. With this configuration, if one of the actuators 206 or 208 were to become inoperable, the remaining operable actuator 208 or 206 can position the flight control surface 202 to the commanded position. For example, if the first actuator 206 became inoperable while in the extended or retracted position, the operational second actuator 208 can be positioned to a retracted or extended actuator position, respectively, to compensate for the inoperable first actuator 206. Because the pivot arm 212 is attached to both the inoperable first actuator 206 and the operable second actuator 208, the summed position of the two actuators 206, 208 positions the flight control surface 202 to the command flight control surface position.

It will be appreciated that the redundant actuator assembly 126 is not limited to compensating for an actuator 206, 208 that becomes inoperable in an extended or retracted position. Indeed, the redundant actuator assembly 126 is configured such that an operational actuator 206, 208 will compensate for an actuator 206, 208 that becomes inoperable in any position to bring the flight control surface 202 to a commanded position. Thus, the aircraft 100 can be adequately controlled until the inoperable actuator 206, 208 is once again operable. It will additionally be appreciated that the redundant actuator assembly 126 could be configured such that the pivot arm 212 does not wholly restore the full range of movement of the flight control surface 202 in the event of an inoperable actuator 206, 208. In such a configuration, however, the redundant actuator assembly 126 is configured to at least allow the flight control surface 202 to be brought to a neutral position so that it will not interfere with the effect of other flight control surfaces on the aircraft.

The flight control surface actuation system 120 described herein is preferably implemented according to an active/active control scheme. With an active/active control scheme, the first and second actuators 206, 208 are both active during normal system 120 operation. If one or both of the controllers 122-1, 122-2 determines that one of the actuators 206 or 208 has become inoperable, it will inactivate the inoperable actuator 206 or 208 and supply actuator position commands only to the operable actuator 208 or 206 in that actuator assembly 126. Alternatively, the system 120 could be implemented according to an active/inactive control scheme. With this control scheme, only one of the actuators 206 or 208 is active and the other actuator 208 or 206 is inactive during normal system 120 operation. If one or both controllers 122-1, 122-2 determines that the normally-active actuator 206 or 208 has become inoperable, then inoperable actuator 206 or 208 is inactivated and the normally-inactive actuator 208 or 206 becomes fully active. In the depicted embodiments, in which the first actuator 206 is a hydraulic actuator and the second actuator 208 is an electromechanical actuator, the first actuator 206 is typically the normally-active actuator, and the second actuator 208 is the normally-inactive actuator. In such instances, the second actuator 208 is locked or braked when in the normally-inactive state, and is unlocked when it becomes active. It will be appreciated that the system controllers 122-1, 122-2 are configured to provide appropriate signals to lock and unlock the second actuator 208.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A flight control surface actuator assembly (124, 126), comprising:
first and second flight control surface actuators (206, 208), each flight control surface actuator (206, 208) adapted to couple to a flight control surface, each flight control surface actuator (206, 208) further adapted to receive a drive force and operable, upon receipt thereof, to move between at least an extended position and a retracted position; and
a pivot arm (212) rotationally coupled to, and configured to pivot relative to, the first and second flight control surface actuators (206, 208), the pivot arm (2 12) adapted to be rotationally coupled to, and configured to pivot relative to, a static airframe structure (215).

2. The actuator assembly (124, 126) of Claim 1, wherein:
the pivot arm (212) includes a first pivot point (222), a second pivot point (224), and an interposed central pivot point (220);
the pivot arm (212) is rotationally coupled to the first and second flight control surface actuators (206, 208) at the first and second pivot points (222, 224); and
the pivot arm (212) is adapted to be rotationally coupled to the static airframe structure (215) at the central pivot point (220).

3. The actuator assembly (124, 126) of Claim 1, wherein:
the first actuator (206) comprises a hydraulic actuator; and the second actuator (208) comprises an electromechanical actuator.

4. The actuator assembly (124, 126) of Claim 1, further comprising:
first and second drive force control units (216,218), the first and second drive force control units (216,218) adapted to receive actuator position commands and operable, upon receipt thereof, to control the drive force supplied to the first and second actuators (206, 208), respectively.

5. The actuator assembly (124, 126) of Claim 4, wherein:
the first actuator (206) comprises a hydraulic actuator; the first drive force control unit (216) comprises a hydraulic fluid control valve;
the second actuator (208) comprises an electromechanical actuator; and
the second drive force control unit (218) comprises a motor.

6. A flight control surface actuation system (120), comprising:
an assembly according to any of claims 1 to 5;
an actuator controller (122-1, 122-2) adapted to receive flight control surface position commands and operable, in response thereto, to supply actuator position commands;
first and second drive force control units (216,218), the first and second drive force control units (216, 218) coupled to receive the actuator position commands and operable, upon receipt thereof, to supply a drive force to respective actuators in the actuator assembly.

## Patentansprüche

1. Flugsteuerflächenstellgliedanordnung (124, 126), die Folgendes umfasst:
ein erstes und ein zweites Flugsteuerflächenstellglied (206, 208), wobei jedes Flugsteuerflächenstellglied (206, 208) zur Verbindung mit einer Flugsteuerfläche ausgeführt ist, wobei jedes Flugsteuerflächenstellglied (206, 208) weiterhin zum Empfang einer Antriebskraft ausgeführt und bei deren Empfang zur Bewegung zwischen mindestens einer ausgefahrenen Position und einer eingefahrenen Position betätigbar ist; und
einen Schwenkarm (212), der drehbar mit dem ersten und zweiten Flugsteuerflächenstellglied (206, 208) verbunden und dazu konfiguriert ist, bezüglich des ersten und zweiten Flugsteuerflächenstellglieds zu schwenken, wobei der Schwenkarm (212) zur drehbaren Verbindung mit einer statischen Flugwerkstruktur (215) ausgeführt und zum Schwenken bezüglich der statischen Flugwerkstruktur konfiguriert ist.

2. Stellgliedanordnung (124, 126) nach Anspruch 1, wobei:
der Schwenkarm (212) einen ersten Drehzapfen (222), einen zweiten Drehzapfen (224) und einen dazwischen angeordneten mittleren Drehzapfen (220) enthält;
der Schwenkarm (212) am ersten und am zweiten Drehpunkt (222, 224) drehbar mit dem ersten und dem zweiten Flugsteuerflächenstellglied (206, 208) verbunden ist; und
der Schwenkarm (212) zur drehbaren Verbindung mit der statischen Flugwerkstruktur (215) an dem mittleren Drehpunkt (220) ausgeführt ist.

3. Stellgliedanordnung (124, 126) nach Anspruch 1, wobei:
das erste Stellglied (206) ein hydraulisches Stellglied umfasst und das zweite Stellglied (208) ein elektromechanisches Stellglied umfasst.

4. Stellgliedanordnung (124, 126) nach Anspruch 1, die weiterhin:
eine erste und eine zweite Antriebskraftsteuereinheit (216, 218) umfasst, wobei die erste und die zweite Antriebskraftsteuereinheit (216, 218) zum Empfang von Stellgliedpositionsbefehlen ausgeführt sind und bei deren Empfang zur Steuerung der dem ersten bzw. dem zweiten Stellglied (206, 208) zugeführten Antriebskraft betätigbar sind.

5. Stellgliedanordnung (124, 126) nach Anspruch 4, wobei:
das erste Stellglied (206) ein hydraulisches Stellglied umfasst; die erste Antriebskraftsteuereinheit (216) ein hydraulisches Fluidsteuerventil umfasst; das zweite Stellglied (208) ein elektromechanisches Stellglied umfasst und die zweite Antriebskraftsteuereinheit (218) einen Motor umfasst.

6. Flugsteuerflächenbetätigungssystem (120), das Folgendes umfasst:
eine Anordnung nach einem der Ansprüche 1 bis 5;
eine Stellgliedsteuerung (122-1, 122-2), die zum Empfang von Flugsteuerflächenpositionsbefehlen ausgeführt und zur Zuführung von Stellgliedpositionsbefehlen als Reaktion darauf betätigbar ist;
eine erste und eine zweite Antriebskraftsteuereinheit (216, 218), wobei die erste und die zweite Antriebskraftsteuereinheit (216, 218) zum Empfang der Stellgliedpositionssignale verbunden und bei deren Empfang zur Zuführung einer Antriebskraft an jeweilige Stellglieder in der Stellgliedanordnung betätigbar sind.

## Revendications

1. Ensemble (124, 126) d'actionneurs de surfaces de commandes de vol comportant :
un premier et un deuxième actionneur (206, 208) de surfaces de commandes de vol, chaque actionneur (206, 208) de surfaces de commandes de vol étant prévu pour se coupler à une surface de commande de vol, chaque actionneur (206, 208) de surfaces de commandes de vol étant en outre prévu pour recevoir une force d'entraînement et pouvant fonctionner, en la recevant, pour se déplacer entre au moins une position déployée et une position rétractée ; et
un bras (212) de pivot couplé de façon tournante et configuré de façon à pivoter par rapport aux premier et deuxième actionneurs (206, 208) de surfaces de commandes de vol, le bras (212) de pivot étant prévu pour être couplé de façon tournante et configuré de façon à pivoter par rapport à une structure (215) de cellule statique.

2. Ensemble (124, 126) d'actionneurs selon la revendication 1 :
le bras (212) de pivot comprenant un premier point (222) de pivot, un deuxième point (224) de pivot et un point (220) de pivot central interposé ;
le bras (212) de pivot étant couplé de façon tournante aux premier et deuxième actionneurs (206, 208) de surfaces de commandes de vol au niveau des premier et deuxième points (222, 224) de pivot ; et
le bras (212) de pivot étant prévu pour être couplé de façon tournante à la structure (215) de cellule statique au niveau du point (220) de pivot central.

3. Ensemble (124, 126) d'actionneurs selon la revendication 1 :
le premier actionneur (206) étant constitué d'un actionneur hydraulique ; et
le deuxième actionneur (208) étant constitué d'un actionneur électromécanique.

4. Ensemble (124, 126) d'actionneurs selon la revendication 1, comportant en outre :
une première et une deuxième unité (216, 218) de régulation de la force d'entraînement, les première et deuxième unités (216, 218) de régulation de la force d'entraînement étant prévues pour recevoir des consignes de position des actionneurs et pouvant fonctionner, en les recevant, pour réguler la force d'entraînement fournie aux premier et deuxième actionneurs (206, 208), respectivement.

5. Ensemble (124, 126) d'actionneurs selon la revendication 4 :
le premier actionneur (206) étant constitué d'un actionneur hydraulique ;
la première unité (216) de régulation de la force d'entraînement étant constituée d'une vanne de régulation de fluide hydraulique ;
le deuxième actionneur (208) étant constitué d'un actionneur électromécanique ; et
la deuxième unité (218) de régulation de la force d'entraînement étant constituée d'un moteur.

6. Système (120) d'actionnement de surfaces de commandes de vol, comportant :
un ensemble selon l'une quelconque des revendications 1 à 5 ;
un contrôleur (122-1, 122-2) d'actionneurs prévu pour recevoir des consignes de position de surfaces de commandes de vol et pouvant fonctionner, en les recevant, pour fournir des consignes de position d'actionneurs ;
une première et une deuxième unité (216, 218) de régulation de la force d'entraînement, les première et deuxième unités (216, 218) de régulation de la force d'entraînement étant couplées de façon à recevoir les consignes de position des actionneurs et pouvant fonctionner, en les recevant, pour fournir une force d'entraînement à des actionneurs correspondants de l'ensemble d'actionneurs.
